# EUROPEAN PATENT SPECIFICATION

(11) **EP 0 768 029 B1**
(45) Date of publication and mention of the grant of the patent: **14.03.2001**
(21) Application number: 96308038.7
(22) Date of filing: 06.11.1996
(51) Int. Cl.: A01K 87/00, A01K 87/02

(54) **A protective device for a fishing pole**
Schutzvorrichtung für eine Angelrute
Dispositif de protection pour canne à pêche

(30) Priority: 06.11.1995 GB 9522700; 22.05.1996 GB 9610735; 14.10.1996 GB 9621399
(43) Date of publication of application: 16.04.1997
(73) Proprietor: Preston, David, Telford, Shropshire TF3 3BA (GB)
(72) Inventor: Preston, David, Telford, Shropshire TF3 3BA (GB)
(74) Representative: Newell, William Joseph

(56) References cited:
- EP-A- 0 610 037
- GB-A- 1 130 106
- GB-A- 2 264 215
- GB-A- 2 302 251

## Description

This invention relates to a protective device for a fishing pole.

Coarse Anglers often use a type of fishing rod known as a pole. These are up to 16 metres in length and made up of approximately 1 meter lengths of hollow carbon fibre tapered tubes which fit together nose to tail. The fishing line (together with float, weights and hook) is attached at the tip end of the pole only, and to get at a hooked fish or to the float the pole must be taken apart at a section joint near the tip end and then reassembled when the float and bait is to be returned to the water.

Reassembly can be a relatively slow process because the nose end of the one section and the tail end of the other must be exactly aligned. Care must be taken not to cause breakage because of the fragile nature of carbon fibre and the thin wall sections which are typically 0.5mm or less. However, speed is of the essence as poles are mostly used in fishing competitions.

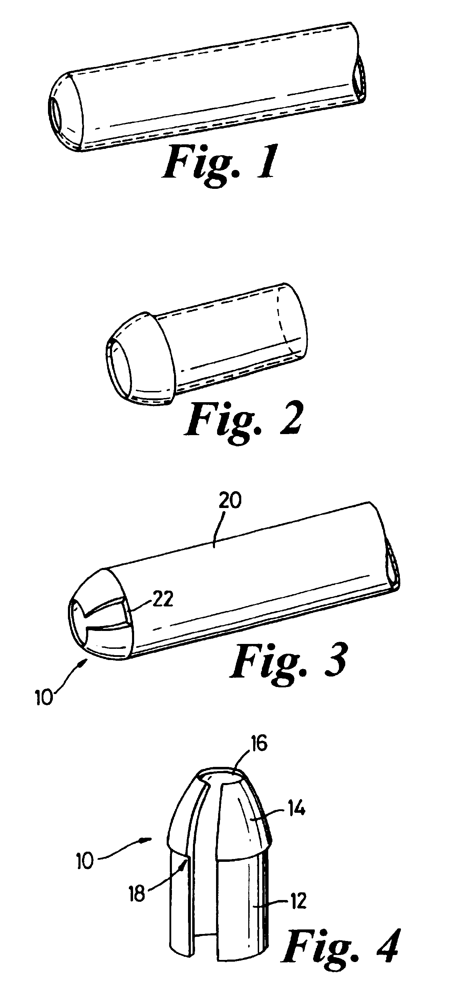

To aid speed and minimise breakages, some poles have sections made with rounded ends which help guide the one section end into the other (see Figure 1 of the accompanying drawings). These require modification to the carbon fibre laying and so can add considerably to the manufacturing cost. There are also plastic devices which when fitted into the pole section end, give a rounded finish to that end (see Figure 2). These need to be accurately machined to fine tolerances because of the weak and inflexible nature of carbon fibre and because of the thinness of the wall sections involved - the shoulder of the device must not be greater than the wall section thickness or the pole sections will jam together or break. If the device is fractions of a millimetre too small it may push into the section to which it is fitted, and be ineffective.

GB 2 264 215A discloses a fishing pole closure member with a rearward portion of frusto-conical shape and a spigot.

There are many hundreds of different poles supplied, each with several sections which would benefit from a rounded end and each of these sections of each pole would require a particular and exact device as described above made solely for it. This poses enormous manufacturing, distribution and purchasing problems.

On careful study of this problem I have determined that, despite the constraints placed by the close tolerances of the noses and tails of adjacent sections and the extremely thin wall sections, it is possible to provide an adaptable device which will readily fit many different sizes of pole section. Depending on the nature of the device, I anticipate that a range of different sized adaptable devices may be needed to cover a reasonable range of pole sections.

Accordingly, in one aspect, this invention provides a protective device for a multi-section fishing pole, which device comprises a body portion for fitting closely into the open end of a fishing pole section to be retained thereby, and a protective head portion which, when the device is fitted, protrudes from the end of the section to provide at least partial protection for the exposed edge of the section, wherein the effective widths of said body portion and said head portion are variable.

I have found that by making the body portion and head portion out of a resiliently deformable material such as a plastics material, the head and body portion may be contracted resiliently so that the body portion may be secured in pole sections of different diameters. I have also found that dimensioning the body portion and head portion such that, throughout the operating diameters of the device, there is a shoulder of depth no greater than the pole section wall thickness extending partly around the device provides effective protection for the rim of the section, and retention.

One of the most intricate aspects has been to provide a design in which the head portion and the body portion are both compressible to reduce the effective diameter thereof, but in which the shoulder between the head and the body is essentially dimensionally stable, and no greater than the wall thickness of the pole, irrespective of the amount of compression.

Accordingly, in another aspect of this invention, there is provided a protective device for a multi-section fishing pole, which device comprises a contractible and/or expandable body portion, a contractible and/or expandable head portion, and a shoulder portion intermediate said head and body portions, the radial dimension of said shoulder portion being substantially invariant throughout the operating compression and/or expansion ranges of said head and body portions.

In one embodiment, the device is of hollow shell form split along its length so that the effective diameters of the body portion and the head portion are reduced when the body portion is compressed and fitted into the end of a pole section of smaller diameter. This provides an automatic reduction in diameter of the head portion, and the preferred shoulder feature referred to above ensures that the compressed device does not push into the section.

In another embodiment, the device is of hollow or shell form with the walls of the shell being corrugated or otherwise shaped and dimensioned so that the body portion and the head portion are compressible to vary the effective widths thereof. By this arrangement, the depth of the shoulder may remain the same throughout the full range of widths of the head/body portion.

The body portion is preferably generally cylindrical and the head portion of part-ogival outer shape with a central orifice at the free end to allow compression or expansion thereof.

The above embodiments may be modified by at least partially filling the internal space of the shell with a resiliently compressible plug element. This may enhance the resilience of the device as a whole. Preferably the plug element is made of a foamed plastics material, and ideally of closed cell material, whereby when fitted into the end of a pole section it obstructs or prevents air flow along the pole section. This has the extremely important advantage that, if a pole section fitted with this embodiment of protective device is dropped into the water accidentally, a buoyant air pocket is formed, thus preventing the section from sinking.

In another aspect, this invention provides an intermediate pole section for a fishing pole, wherein at least one end of said section is closed or provided with means obstructing or preventing the passage of air into said end. In this arrangement, the closed end or preventing or obstructing means causes a buoyancy pocket to form in the associated end of the section if it is accidentally dropped into the water.

Whilst the invention has been described above, it extends to any inventive combination of features set out above or in the following description.

The invention may be performed in various ways and various embodiments thereof will now be described in detail, reference being made to the accompanying drawings in which:-
Figure 1 is a perspective view of the end of a prior art fishing pole section with a round end;
Figure 2 is a perspective view of a prior art fixed diameter device for a fishing pole;
Figure 3 is a perspective view of a first embodiment of protective device of this invention fitted in the end of a pole section;
Figure 4 is a perspective view of the protective device of Figure 3 removed from the pole section;
Figure 5 is a diagram showing a modification of the embodiment of Figures 3 and 4;
Figure 6 is a side view of a second embodiment of protective device;
Figure 7 is an underplan view of the protective device of Figure 6, when relaxed at its largest diameter, and
Figure 8 is an underplan view of the protective device of Figure 6, when contracted to its smallest diameter.

Referring to Figures 3 and 4, the protective device 10 is of hollow sleeve-like construction, comprising a body portion 12 of cylindrical form, and a head portion 14 of hollow ogival form truncated to form an aperture 16. The device is formed of resilient plastics material such as Acetyl and split down one side so that it may be contracted to be push-fitted into a number of pole sections of smaller diameter.

Between the head portion 14 and the body portion 12 is formed a sharp shoulder 18 of depth less than the typical wall thickness of a pole section 20.

In use, the user squeezes the protective device to reduce the diameter of the body portion to be less than the internal diameter of the pole section 20, inserts the device into the end of the pole section and then releases the squeezing pressure and pushes the device home so that the shoulder 18 abuts the rim 22 of the pole section 20, as shown in Figure 3, to protect the section end, and to provide a rounded guide surface to assist rapid assembly with the next section. It is important to note that, when fitted to a pole section, the outer diameter of the device is never greater than the outer diameter of the pole section.

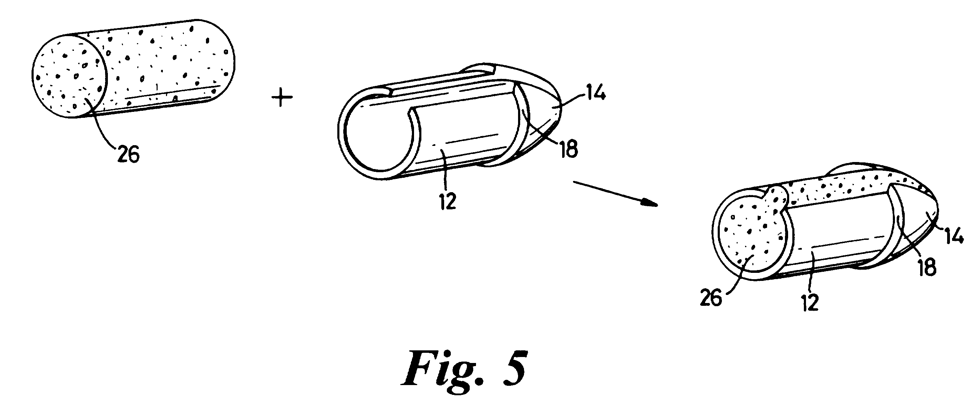

Referring now to the modification of Figure 5, here a cylindrical insert 26 of closed cell foam is inserted tightly to fill the interior of the body portion 12 and to seal against the interior of the head portion 14. When the protective device 10 and the closed cell foam cylinder 26 are inserted together into the pole section 20, an airtight seal is formed. The advantage of this is that the section will float if dropped accidentally into the water, allowing easy retrieval. When water enters the other, open, end, that end tends to sink and the air trapped in the closed end provides buoyancy.

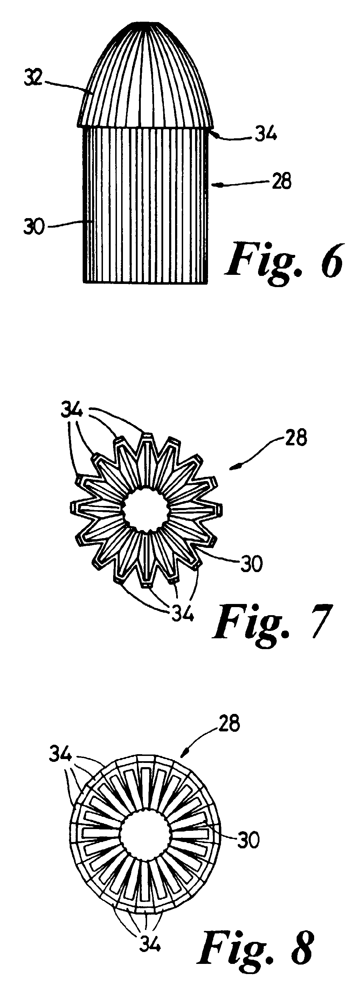

Referring now to the embodiment of Figure 6 to 8, here the protective device 28 comprises a body portion 30 and a head portion 32, defining therebetween a shoulder 34, the body portion and head portion both being of corrugated form. The device is thus resiliently compressible from the position shown in Figure 7, in which the shoulder 34 is of interrupted form and the compressed position, in Figure 8, in which the shoulder is of generally continuous form.

This latter design achieves the same difficult objective of maintaining a constant lip or shoulder depth irrespective of the diameter of the pole section into which it is fitted and also fits a much larger range of possible pole section diameters.

## Claims

1. A protective device (10) for a multi-section fishing (20) pole, which device comprises a body portion (12)for fitting closely into an open end of a fishing pole section (20) to be retained thereby, and a protective head portion (14) which, when the device is fitted, protrudes from the end of the section to define a shoulder portion (18) which provides at least partial protection for the adjacent edge (22) of the section, characterised in that the effective widths of said body portion (12) and said head portion (14) are variable.

2. A protective device according to Claim 1, whereon the radial dimension of said shoulder portion (18) is substantially invariant throughout the operating variable width ranges of said head (14) and body portions (12).

3. A protective device according to Claim 2, wherein said shoulder portion (18) has a radial dimension approximately equal to, or slightly less than, the wall thickness of said end (22) of the fishing pole section (20).

4. A protective device according to any preceding Claim wherein the head (14) and body (12) portions are made of resiliently deformable material.

5. A protective device according to Claim 4, wherein said resiliently deformable material is a plastics material.

6. A protective device according to any preceding Claim, wherein the device is of hollow form, split along its length to allow resilient deformation to vary the effective widths of said body portion (12) and said head portion (14).

7. A protective device according to any preceding Claim, wherein at least one of the body portion (12) and the head portion (14) is corrugated or otherwise formed to allow resilient contraction and/or expansion thereof, whilst substantially maintaining the radial dimension of the shoulder (18).

8. A protective device according to any preceding Claim wherein the body portion (12) is generally cylindrical and the head portion (14) is generally rounded.

9. A protective device according to any preceding Claim, wherein at least part of an internal space in said device is fitted with a resiliently compressible plug material (26).

10. A protective device according to Claim 9, wherein said compressible plug material (26) comprises a foamed plastics material.

11. A protective device according to Claim 10, wherein said plastics material is a closed cell foamed material.

12. A protective device according to any of the preceding Claims, which, when fitted to a fishing pole in use, prevents the passage of air into and/or from said end.

## Patentansprüche

1. Schutzeinrichtung (10) für eine mehrteilige Angelrute (20), wobei die Schutzeinrichtung umfaßt ein Gehäuseteil (12), welches in ein offenes Ende eines Angelrutenabschnittes (20) paßt, wobei der Angelrutenabschnitt das Gehäuseteil hält, und ein schützendes Kopfteil (14), welches sich bei eingesteckter Schutzeinrichtung von dem Angelrutenabschnitt erhebt und einen Schulterabschnitt (18) ausbildet, der einen wenigstens teilweisen Schutz für die benachbarte Endkante (22) des Angelrutenabschnittes zur Verfügung stellt,
**dadurch gekennzeichnet,**
daß die effektive Breite des Gehäuseteils (12) und des Kopfteiles (14) variabel ist.

2. Schutzeinrichtung nach Anspruch 1, dadurch gekennzeichnet, daß die radiale Ausdehnung des Schulterabschnittes (18) über den gesamten variablen Breitenbereich des Kopfes (14) und des Gehäuseteils (12) weitgehend konstant ist.

3. Schutzeinrichtung nach Anspruch 2, dadurch gekennzeichnet, daß die radiale Ausdehnung des Schulterabschnittes (18) im wesentlichen gleich oder etwas kleiner ist als die Wanddicke der Endkante (22) des Angelrutenabschnittes (20).

4. Schutzeinrichtung nach einem der vorhergehenden Ansprüche, dadurch gekennzeichnet, daß Kopf- (14) und Gehäuseteil (12) aus einem elastisch deformierbaren Werkstoff hergestellt sind.

5. Schutzeinrichtung nach Anspruch 4, dadurch gekennzeichnet, daß der elastisch deformierbare Werkstoff ein Kunststoff ist.

6. Schutzeinrichtung nach einem der vorhergehenden Ansprüche, dadurch gekennzeichnet, daß diese hohl ausgebildet und in Längsrichtung geschlitzt ist, so daß die elastische Deformierbarkeit die effektive Breite des Gehäuseteils (12) und des Kopfteiles (14) variiert.

7. Schutzeinrichtung nach einem der vorhergehenden Ansprüche, dadurch gekennzeichnet, daß das Gehäuseteil (12) und/oder das Kopfteil (14) gewellt oder in anderer Weise ausgeformt sind, so daß eine elastische Kontraktion und/oder Expansion desselben zur Verfügung steht, wobei die radiale Ausdehnung der Schulter (18) im wesentlichen konstant bleibt.

8. Schutzeinrichtung nach einem der vorhergehenden Ansprüche, dadurch gekennzeichnet, daß das Gehäuseteil (12) im wesentlichen zylindrisch und das Kopfteil (14) im wesentlichen rund ausgebildet ist.

9. Schutzeinrichtung nach einem der vorhergehenden Ansprüche, dadurch gekennzeichnet, daß wenigstens ein Teil eines Innenraumes der Schutzeinrichtung derart ausgebildet ist, daß ein elastisch deformierbarer Werkstoff (26) einsteckbar ist.

10. Schutzeinrichtung nach Anspruch 9, dadurch gekennzeichnet, daß der kompressible, einsteckbare Werkstoff (26) ein geschäumter Kunststoff ist.

11. Schutzeinrichtung nach Anspruch 10, dadurch gekennzeichnet, daß der Kunststoff ein geschlossenzelliger Schaumstoff ist.

12. Schutzeinrichtung nach einem der vorhergehenden Ansprüche, dadurch gekennzeichnet, daß diese derart ausgebildet ist, daß bei eingesteckter Schutzeinrichtung diese ein Eindringen von Luft in das und/oder aus diesem Ende heraus verhindert.

## Revendications

1. Dispositif de protection (10) pour une canne à pêche multi-sections (20), lequel dispositif comprend une partie de corps (12) destinée à s'emboîter étroitement dans une extrémité ouverte d'une section (20) de canne à pêche pour y être retenue, et une partie de tête de protection (14), laquelle, lorsque le dispositif est installé, fait saillie à partir de l'extrémité de la section afin de définir une partie d'épaulement (18), laquelle assure une protection au moins partielle pour la bordure adjacente (22) de la section, caractérisé par le fait que les largeurs effectives de ladite partie de corps (12) et de ladite partie de tête (14) sont variables.

2. Dispositif de protection selon la revendication 1, dans lequel la dimension radiale de ladite partie d'épaulement (18) est sensiblement invariante dans toutes les plages de largeurs variables opératoires desdites parties de tête (14) et de corps (12).

3. Dispositif de protection selon la revendication 2, dans lequel ladite partie d'épaulement (18) a une dimension radiale approximative égale ou légèrement inférieure à l'épaisseur de paroi de ladite extrémité (22) de la section (20) de canne à pêche.

4. Dispositif de protection selon l'une quelconque des revendications précédentes, dans lequel les parties de tête (14) et de corps (12) sont faites d'une matière élastiquement déformable.

5. Dispositif de protection selon la revendication 4, dans lequel ladite matière élastiquement déformable est une matière plastique.

6. Dispositif de protection selon l'une quelconque des revendications précédentes, dans lequel le dispositif est de forme creuse, fendu le long de sa longueur pour permettre une déformation élastique afin de faire varier les largeurs effectives de ladite partie de corps (12) et de ladite partie de tête (14).

7. Dispositif de protection selon l'une quelconque des revendications précédentes, dans lequel au moins l'une parmi la partie de corps (12) et la partie de tête (14) est cannelée ou autrement façonnée pour permettre une contraction élastique et/ou un élargissement élastique de celle-ci, tout en conservant de façon substantielle la dimension radiale de l'épaulement (18).

8. Dispositif de protection selon l'une quelconque des revendications précédentes, dans lequel la partie de corps (12) est généralement cylindrique et la partie de tête (14) est généralement arrondie.

9. Dispositif de protection selon l'une quelconque des revendications précédentes, dans lequel au moins une partie de l'espace interne dans ledit dispositif est garnie d'une matière formant bouchon (26), élastiquement compressible.

10. Dispositif de protection selon la revendication 9, dans lequel ladite matière compressible formant bouchon (26) comprend une matière plastique moussée.

11. Dispositif de protection selon la revendication 10, dans lequel ladite matière plastique est une matière moussée à cellules fermées.

12. Dispositif de protection selon l'une quelconque des revendications précédentes, lequel, lorsqu'il est adapté à une canne à pêche en utilisation, empêche le passage de l'air dans et/ou à partir de ladite extrémité.
